# FASCICULE DE BREVET EUROPEEN

(11) **EP 4 014 742 B1**
(45) Date de publication et mention de la délivrance du brevet: **07.06.2023**
(21) Numéro de dépôt: 21210110.9
(22) Date de dépôt: 24.11.2021
(51) Int. Cl.: A21C 5/04, A21C 11/00

(54) **PROCÉDÉ ET INSTALLATION DE PRÉPARATION AUTOMATISÉE DE FONDS DE TARTE EN FORME DE COURONNES**
VERFAHREN UND INSTALLATION ZUR AUTOMATISCHEN ZUBEREITUNG VON TORTENBODEN IN KRONENFORM
PROCESS AND INSTALLATION FOR AUTOMATIC PREPARATION OF PIE BASES IN THE SHAPE OF CROWNS

(30) Priorité: 21.12.2020 FR 2013781
(43) Date de publication de la demande: 22.06.2022
(73) Titulaire: Compagnie des Patissiers, 13016 Marseille (FR)
(72) Inventeur: DEMANGE, Julien, 13100 AIX EN PROVENCE (FR); MATIGNON, Frédéric, 13300 SALON DE PROVENCE (FR)
(74) Mandataire: Cabinet Beau de Loménie

(56) Documents cités:
- WO-A1-2019/232562
- US-A- 1 879 951
- US-A- 2 585 379
- US-A- 2 595 865
- US-A- 3 880 567
- US-A1- 2005 276 895
- US-B2- 6 610 344

## Description

### Domaine technique

L'invention se rapporte au domaine général de la pâtisserie. Elle concerne plus précisément la réalisation automatique de fonds de tarte ayant une forme de couronne.

### Technique antérieure

Une tarte est une pâtisserie plate, le plus souvent ronde, faite d'un fond de pâte avec rebord rempli de divers ingrédients (fruits, confiture, crème, frangipane, etc.) que l'on cuit au four (sauf certains fruits rouges que l'on met crus sur la pâte cuite) et que l'on consomme généralement refroidie.

Il est connu de réaliser des fonds de tarte de façon automatisée et à la chaîne au moyen d'une ligne de production dans laquelle des moules à tarte sont convoyés d'un module à un autre module. Alternativement, la ligne de production peut comprendre des cavités formées dans une plaque convoyées d'un module à un autre module, les cavités ayant une forme de moule à tarte.

En particulier, ces lignes de production comprennent typiquement un module d'extrusion au niveau duquel de la pâte issue d'une filière est déposée sous forme d'un pâton dans chaque moule à tarte ou cavité, et un module de fonçage disposé en aval du module d'extrusion et au niveau duquel le pâton déposé dans chaque moule à tarte est écrasé pour épouser la forme du moule à tarte ou de la cavité. Les fonds de tarte ainsi préparés peuvent ensuite être éventuellement précuits avant d'être démoulés et conditionnés pour leur stockage et transport.

Il est également connu de réaliser des fonds de tarte ayant une forme de couronne ou d'anneau. Des moules à tarte ont été spécialement conçus pour réaliser de tels fonds de tarte. Typiquement, ces moules se présentent sous la forme d'un moule à tarte classique avec au centre un trou rond muni d'un rebord annulaire.

Compte-tenu de la forme particulière de ces moules à tarte, il n'existe pas à ce jour de procédé permettant de fabriquer de façon automatisée et à la chaîne des fonds de tarte en forme de couronnes.

Le document US 2 585 379 A divulgue un procédé de préparation automatisée de "doughnuts", comprenant le convoyage sur un convoyeur d'empreintes en forme de couronnes, le procédé comprenant successivement une étape d'extrusion, une étape de dépose et une étape de fonçage.

### Exposé de l'invention

La présente invention a donc pour but de proposer un procédé entièrement automatisé de fabrication de fonds de tarte en forme de couronnes.

Conformément à l'invention, ce but est atteint grâce à un procédé de préparation automatisée de fonds de tarte en forme de couronnes, comprenant le convoyage sur un convoyeur d'empreintes en forme de couronnes, les empreintes étant soumises successivement à une étape d'extrusion, une étape de dépose et une étape de fonçage, procédé dans lequel :
- l'étape d'extrusion comprend le gavage en pâte d'au moins une alvéole d'un cylindre rotatif de support d'alvéoles ;
- l'étape de dépose comprend l'éjection des pâtons hors du cylindre rotatif de support d'alvéoles et la dépose sur un fond de chaque empreinte d'au moins deux pâtons distincts ; et
- l'étape de fonçage comprend l'écrasement des pâtons déposés dans chaque empreinte au moyen d'une matrice de forme complémentaire à l'empreinte afin de former une pâte recouvrant au moins le fond de l'empreinte.

Par « empreinte », on entend ici un moule à tarte positionné sur le convoyeur, ou bien une cavité réalisée directement dans une plaque convoyée par le convoyeur. Le procédé selon l'invention est remarquable en ce qu'il prévoit, lors de l'étape de dépose, de déposer au moins deux pâtons (i.e. morceaux de pâte) distincts et excentrés au sein de chaque empreinte, puis de foncer ces pâtons à l'aide d'une matrice de forme complémentaire à l'empreinte pour permettre à la pâte de recouvrir tout le fond de celle-ci. Cet enchaînement d'étapes permet ainsi de réaliser de façon automatisée et à la chaîne des fonds de tarte en forme de couronnes (ou anneaux).

De préférence, l'étape de dépose comprend la dépose au sein de chaque empreinte de quatre pâtons distincts régulièrement espacés autour d'un axe de symétrie de l'empreinte de façon à faciliter davantage l'obtention d'un fond de tarte en forme de couronne lors de l'étape de fonçage.

Pour empreinte, lesdits au moins deux pâtons peuvent être avantageusement déposés simultanément au cours de l'étape de dépose.

Selon une disposition avantageuse, au cours de l'étape de dépose, les pâtons sont éjectés hors du cylindre rotatif de support d'alvéoles par un éjecteur équipé de soupapes à air qui libèrent de l'air entre l'éjecteur et le pâton afin d'éviter que la pâte ne reste collée à l'éjecteur.

Selon une autre disposition avantageuse, l'étape de fonçage comprend le chauffage de la matrice afin d'empêcher la pâte recouvrant le fond de l'empreinte de coller à la matrice.

Selon encore une autre disposition avantageuse, l'étape de fonçage comprend en outre l'injection d'air entre la matrice et la pâte recouvrant le fond de l'empreinte afin d'en faciliter le décollement de la matrice.

Dans le cas où les empreintes sont des moules à tarte, le procédé peut comprendre en outre, préalablement à l'étape d'extrusion, une étape de dépilage des moules à tarte au cours de laquelle des piles de moules à tarte sont automatiquement dépilés pour être déposés sur le convoyeur.

Corrélativement, l'invention a aussi pour objet une installation de préparation automatisée de fonds de tarte en forme de couronnes, comprenant un convoyeur destiné à déplacer des empreintes en forme de couronnes le long d'une ligne de production, un module d'extrusion destiné à gaver en pâte au moins une alvéole d'un cylindre rotatif de support d'alvéoles, un module de dépose pour éjecter des pâtons hors du cylindre de support d'alvéoles et déposer sur un fond de chaque empreinte au moins deux pâtons distincts , et un module de fonçage destiné à écraser les pâtons déposés dans chaque empreinte au moyen d'une matrice de forme complémentaire à l'empreinte afin de former une pâte recouvrant au moins le fond de l'empreinte.

Le module d'extrusion comprend le cylindre rotatif de support d'alvéoles muni d'au moins une alvéole destinée à être gavée de pâte pour former un pâton, et peut comprendre des éjecteurs destinés à éjecter les pâtons hors du cylindre rotatif de support d'alvéoles. Dans ce cas, les éjecteurs du module d'extrusion comprennent avantageusement des soupapes à air pour libérer de l'air entre l'éjecteur et le pâton.

Le module de fonçage comprend la matrice de forme complémentaire à l'empreinte destinée à venir contre l'empreinte pour écraser les pâtons et former une pâte recouvrant au moins le fond de l'empreinte. Dans ce cas, la matrice du module de fonçage comprend avantageusement au moins une résistance électrique pour chauffer la matrice, et au moins une soupape à air pour injecter de l'air entre la matrice et la pâte recouvrant le fond de l'empreinte.

### Brève description des dessins

[fig.1] La [fig.1] est une vue fonctionnelle des différents modules de l'installation de mise en oeuvre du procédé selon l'invention.
[fig.2] La [fig.2] représente de façon schématique les modules d'extrusion et de dépose de l'installation de mise en oeuvre du procédé selon l'invention.
[fig.3] La [fig.3] est une vue schématique de dessus d'un moule à tarte en sortie du module d'extrusion.
[fig.4] La [fig.4] représente de façon schématique le module de fonçage de l'installation de mise en oeuvre du procédé selon l'invention.

### Description des modes de réalisation

Le procédé selon l'invention concerne la fabrication de façon entièrement automatisée et à la chaîne de fonds de tarte en forme de couronnes (ou anneaux). Ces fonds de tarte ont un fond plat en forme d'anneau qui se prolonge au niveau de son diamètre interne et de son diamètre externe par des rebords annulaires.

Ces fonds de tarte peuvent être fabriqués à partir d'une pâte à tarte, par exemple une pâte brisée ou une pâte sablée, préalablement préparée et qui est déposée dans le fond de moules à tarte M. Ces derniers ont une forme également de couronne avec un fond plat en forme d'anneau qui se prolonge au niveau de son diamètre interne et de son diamètre externe par des rebords annulaires. Alternativement, les fonds de tarte peuvent être fabriqués à partir d'une pâte à tarte déposée dans le fond d'une pluralité de cavités réalisées directement dans une plaque positionnée sur le convoyeur, ces cavités ayant également une forme de couronne avec un fond plat qui se prolonge au niveau de ses diamètres par des rebords annulaires.

Dans la suite de la description, le procédé de fabrication selon l'invention sera décrit dans une application avec des moules à tarte, étant entendu que la présente invention s'applique également à un procédé de fabrication utilisant une plaque à cavités en formes de couronnes.

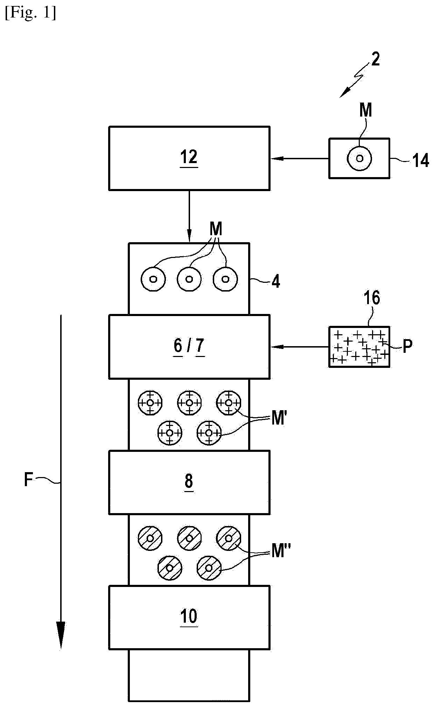

Les différentes étapes de fabrication de ces fonds de tarte selon le procédé conforme à l'invention sont mises en oeuvre par une installation telle que celle représentée par la [fig.1].

Cette installation 2 est une ligne de production qui comprend notamment un convoyeur 4 pour acheminer des moules à tarte au travers successivement d'un module d'extrusion 6, d'un module de dépose 7, d'un module de fonçage 8, et éventuellement d'un module 10 de pré-cuisson, de cuisson ou de surgélation.

L'installation peut également comprendre, en amont du module d'extrusion 6, un module de dépilage 12 des moules à tarte (ce module étant absent en cas d'utilisation d'une plaque à cavités). Plus précisément, à partir de piles de moules à tarte M, un tel module de dépilage 12 a pour fonction de « dépiler » automatiquement ces piles pour déposer les moules M sur le convoyeur 4.

Le fonctionnement de ce module de dépilage 12 peut être le suivant. Un bras rotatif muni de ventouses à aspiration se positionne face à une pile de moules à tarte. Une aspiration des ventouses est alors activée pour se saisir d'un moule dans le bas de la pile, puis le bras rotatif est pivoté pour se déplacer au-dessus du convoyeur 4. L'aspiration des ventouses est alors désactivée, ce qui permet au moule saisi d'être déposé sur le convoyeur. L'opération de dépilage est répétée en continu de façon synchronisée avec l'avance du convoyeur.

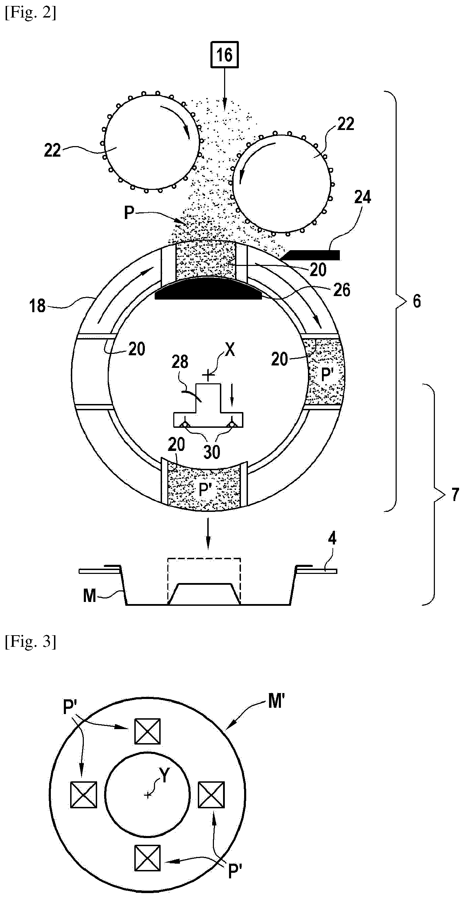

Les moules à tarte M sont alors entraînés par le convoyeur 4 et passent sous un module d'extrusion 6 et un module de dépose 7 tels que ceux représentés schématiquement par la [fig.2].

Le module d'extrusion 6 est alimenté en pâte P préalablement préparée à partir d'une filière 16. Il comprend notamment un cylindre rotatif de support d'alvéoles 18 ayant un axe de symétrie X horizontal. Ce cylindre de support d'alvéoles 18 est positionné perpendiculairement à la direction d'avance F du convoyeur et est mis en rotation autour de son axe de symétrie X.

Comme représenté sur la [fig.2], le cylindre de support d'alvéoles 18 comprend une pluralité d'alvéoles 20 traversantes qui sont destinées à être gavées de pâte pour former des pâtons (c'est-à-dire des morceaux de pâte).

Ces alvéoles 20 sont dimensionnées en fonction des dimensions que l'on souhaite donner aux pâtons déposés dans les moules à tarte. Lorsque ces alvéoles se trouvent en position haute, elles sont alimentées par gravité en pâte P provenant de la filière 16 au moyen de rouleaux extrudeurs 22. Un racleur externe 24 permet de retenir la pâte qui s'accumule sur la périphérie extérieure du cylindre de support d'alvéoles 18.

Par ailleurs, une butée interne 26 est positionnée à l'intérieur du cylindre de support d'alvéoles en regard de l'alvéole 20 en cours de gavage afin d'éviter que la pâte ne s'échappe hors de l'alvéole. Lorsque la pâte P a entièrement remplie une alvéole 20, elle forme un pâton P'.

Une fois que le pâton P' ainsi formé se trouve en position basse (après une rotation de 180° du cylindre de support d'alvéoles), il est éjecté hors de l'alvéole 20 pour tomber par gravité dans un moule à tarte M positionné en dessous sur le convoyeur 4.

A cet effet, le module de dépose 7 comprend des éjecteurs 28 destinés à éjecter les pâtons P' hors du cylindre de support d'alvéoles 18.

Ces éjecteurs 28 sont des pièces mobiles entre une position haute et une position basse qui sont dimensionnées et actionnées pour passer au travers des alvéoles 20 et ainsi éjecter les pâtons hors de celles-ci lorsque ces alvéoles sont en position basse.

De préférence, ces éjecteurs 28 sont chacun équipés de soupapes à air 30 qui sont activées lorsque l'éjecteur descend au travers d'une alvéole 20. Ils permettent ainsi de libérer de l'air entre l'éjecteur et le pâton P' pour éviter que ce dernier ne reste collé à l'éjecteur.

Selon l'invention, le cylindre de support d'alvéoles 18 avec ses alvéoles 20 et ses éjecteurs 28 sont configurés pour déposer au moins deux pâtons P' distincts (c'est-à-dire provenant chacun d'une alvéole) au sein d'un même moule à tarte M.

De préférence, ces pâtons P' distincts sont déposés simultanément et ne sont pas en contact les uns avec les autres lors de leur dépose.

De préférence également, comme représenté sur la [fig.3], ces pâtons P' sont au nombre de quatre et sont déposés pour être régulièrement espacés autour d'un axe de symétrie Y du moule à tarte M.

Les moules à tarte M' dans lesquels les pâtons P' ont été déposés sont alors convoyés vers le module de fonçage 8.

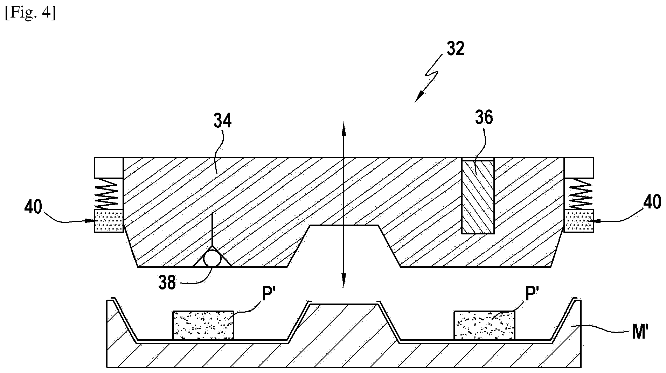

Comme représenté plus précisément sur la [fig.4], ce module de fonçage 8 utilise le principe de la matrice/contre-matrice pour écraser les pâtons. Il comprend une tête 32 mobile entre une position haute et une position basse et équipée d'une pluralité de matrices 34 ayant chacune une forme complémentaire au moule à tarte M.

Lorsque la tête 32 du module de fonçage va descendre en position basse dans le moule M', la matrice 34 va écraser les pâtons P' afin de former une pâte recouvrant tout le fond du moule à tarte.

De façon avantageuse, chaque matrice 34 comprend au moins une résistance électrique 36 pour chauffer la matrice afin d'empêcher la pâte de coller à la matrice sous l'effet de l'écrasement.

De façon avantageuse également, chaque matrice 34 comprend au moins une soupape à air 38 pour injecter de l'air entre la matrice et la pâte recouvrant le fond du moule à tarte. Cette injection d'air permet de faciliter le décollement de la pâte de la matrice une fois que celle-ci remontera en position haute.

De façon avantageuse encore, chaque matrice 34 comprend en outre des pièces 40 montées sur ressorts en regard des rebords du moule à tarte afin d'assurer une étanchéité de l'assemblage matrice/contre-matrice.

Les moules à tarte M" avec leur fond de pâte ainsi formé peuvent éventuellement être convoyés ensuite vers un module supplémentaire 10 (pour y subir une pré-cuisson, une cuisson ou une surgélation par exemple).

## Revendications

1. Procédé de préparation automatisée de fonds de tarte en forme de couronnes, comprenant le convoyage sur un convoyeur (4) d'empreintes (M) en forme de couronnes, le procédé comprenant successivement une étape d'extrusion, une étape de dépose et une étape de fonçage, dans lequel :
- l'étape d'extrusion comprend le gavage en pâte d'au moins une alvéole (20) d'un cylindre rotatif de support d'alvéoles (18) ;
- l'étape de dépose comprend l'éjection des pâtons (P') hors du cylindre rotatif de support d'alvéoles (18) et la dépose sur un fond de chaque empreinte d'au moins deux pâtons distincts ; et
- l'étape de fonçage comprend l'écrasement des pâtons déposés dans chaque empreinte au moyen d'une matrice (34) de forme complémentaire à l'empreinte afin de former une pâte recouvrant au moins le fond de l'empreinte.

2. Procédé selon la revendication 1, dans lequel l'étape de dépose comprend la dépose au sein de chaque empreinte de quatre pâtons distincts régulièrement espacés autour d'un axe de symétrie de l'empreinte.

3. Procédé selon l'une des revendications 1 et 2, dans lequel, pour chaque empreinte, lesdits au moins deux pâtons sont déposés simultanément au cours de l'étape de dépose.

4. Procédé selon l'une quelconque des revendications 1 à 3, dans lequel, au cours de l'étape de dépose, les pâtons sont éjectés hors du cylindre rotatif de support d'alvéoles (18) par un éjecteur (28) équipé de soupapes à air (30) qui libèrent de l'air entre l'éjecteur et le pâton.

5. Procédé selon l'une quelconque des revendications 1 à 4, dans lequel l'étape de fonçage comprend le chauffage de la matrice afin d'empêcher la pâte recouvrant le fond de l'empreinte de coller à la matrice.

6. Procédé selon l'une quelconque des revendications 1 à 6, dans lequel l'étape de fonçage comprend en outre l'injection d'air entre la matrice et la pâte recouvrant le fond de l'empreinte afin d'en faciliter le décollement de la matrice.

7. Procédé selon l'une quelconque des revendications 1 à 7, dans lequel les empreintes (M) sont des moules à tarte, le procédé comprenant en outre, préalablement à l'étape d'extrusion, une étape de dépilage des moules à tarte au cours de laquelle des piles (14) de moules à tarte sont automatiquement dépilées pour être déposés sur le convoyeur.

8. Installation de préparation automatisée de fonds de tarte en forme de couronnes, comprenant des empreintes (M) en forme de couronnes, un convoyeur (4) destiné à déplacer les empreintes (M) le long d'une ligne de production, un module d'extrusion (6) destiné à gaver en pâte au moins une alvéole (20) d'un cylindre rotatif de support d'alvéoles (18), un module de dépose (7) pour éjecter des pâtons (P') hors du cylindre de support d'alvéoles (18) et déposer sur un fond de chaque empreinte au moins deux pâtons (P') distincts , et un module de fonçage (8) destiné à écraser les pâtons déposés dans chaque empreinte au moyen d'une matrice (34) de forme complémentaire à l'empreinte afin de former une pâte recouvrant au moins le fond de l'empreinte.

9. Installation selon la revendication 9, dans laquelle le module d'extrusion comprend le cylindre rotatif de support d'alvéoles (18) muni d'au moins une alvéole (20) destinée à être gavée de pâte pour former un pâton, et des éjecteurs (28) destinés à éjecter les pâtons hors du cylindre de support d'alvéoles.

10. Installation selon la revendication 9, dans laquelle les éjecteurs (28) du module d'extrusion comprennent des soupapes à air (30) pour libérer de l'air entre l'éjecteur et le pâton.

11. Installation selon l'une quelconque des revendications 8 à 10, dans laquelle le module de fonçage comprend la matrice (34) de forme complémentaire à l'empreinte destinée à venir contre l'empreinte pour écraser les pâtons et former une pâte recouvrant au moins le fond de l'empreinte.

12. Installation selon la revendication 11, dans laquelle la matrice (34) du module de fonçage comprend au moins une résistance électrique (36) pour chauffer la matrice, et au moins une soupape à air (38) pour injecter de l'air entre la matrice et la pâte recouvrant le fond de l'empreinte.

## Patentansprüche

1. Verfahren zur automatisierten Zubereitung von Tortenböden in Kronenform, das die Beförderung von Abdrücken (M) in Kronenform auf einem Förderband (4) umfasst, wobei das Verfahren aufeinanderfolgend einen Extrusionsschritt, einen Ablageschritt und einen Auslegeschritt umfasst, wobei:
- der Extrusionsschritt das Füllen mindestens einer Zelle (20) eines zellentragenden Rotationszylinders (18) mit Teig umfasst;
- der Ablageschritt das Ausstoßen der Teiglinge (P') aus dem zellentragenden Rotationszylinder (18) und das Ablegen von mindestens zwei verschiedenen Teiglingen auf dem Boden jedes Abdrucks umfasst; und
- der Auslegeschritt das Zerdrücken der in jeden Abdruck abgelegten Teiglinge mittels einer zum Abdruck komplementär geformten Matrize (34) umfasst, um einen Teig zu formen, der mindestens den Boden des Abdrucks bedeckt.

2. Verfahren nach Anspruch 1, wobei der Ablageschritt das um eine Symmetrieachse des Abdrucks gleichmäßig beabstandete Ablegen von vier verschiedenen Teiglingen in jeden Abdruck umfasst.

3. Verfahren nach einem der Ansprüche 1 und 2, wobei für jeden Abdruck die mindestens zwei Teiglinge während des Ablageschritts gleichzeitig abgelegt werden.

4. Verfahren nach einem der Ansprüche 1 bis 3, wobei die Teiglinge während des Ablageschritts aus dem zellentragenden Rotationszylinder (18) von einem Auswerfer (28) ausgeworfen werden, der mit Luftventilen (30) ausgestattet sind, die zwischen dem Auswerfer und dem Teigling Luft freigeben.

5. Verfahren nach einem der Ansprüche 1 bis 4, wobei der Auslegeschritt das Heizen der Matrize umfasst, um zu vermeiden, dass der den Boden des Abdrucks bedeckende Teig an der Matrize klebt.

6. Verfahren nach einem der Ansprüche 1 bis 6, wobei der Auslegeschritt ferner das Einleiten von Luft zwischen die Matrize und den Teig umfasst, der den Boden des Abdrucks bedeckt, um dessen Lösen von der Matrize zu erleichtern.

7. Verfahren nach einem der Ansprüche 1 bis 7, wobei die Abdrücke (M) Tortenformen sind, wobei das Verfahren ferner vor dem Extrusionsschritt einen Schritt des Entstapelns der Tortenformen umfasst, bei dem die Tortenformstapel (14) automatisch entstapelt werden, um auf dem Förderband abgelegt zu werden.

8. Anlage zur automatisierten Zubereitung von Tortenböden in Kronenform, die Abdrücke (M) in Kronenform, ein Förderband (4), das bestimmt ist, die Abdrücke (M) entlang einer Produktionslinie zu verlagern, ein Extrusionsmodul (6), das bestimmt ist, mindestens eine Zelle (20) eines zellentragenden Rotationszylinders (18) mit Teig zu füllen, ein Ablagemodul (7), um Teiglinge (P') aus dem zellentragenden Zylinder (18) auszuwerfen und auf einem Boden jedes Abdrucks mindestens zwei verschiedene Teiglinge (P') abzulegen, und ein Auslegemodul (8), das bestimmt ist, die in jedem Abdruck abgelegten Teiglinge mittels einer zum Abdruck komplementär geformten Matrize (34) zu zerdrücken, um einen Teig zu formen, der mindestens den Boden des Abdrucks bedeckt, umfasst.

9. Anlage nach Anspruch 9, wobei das Extrusionsmodul den zellentragenden Rotationszylinder (18) umfasst, der mit mindestens einer Zelle (20) ausgestattet ist, die bestimmt ist, mit Teig gefüllt zu sein, um einen Teigling zu formen, und Auswerfer (28), die bestimmt sind, die Teiglinge aus dem zellentragenden Zylinder auszuwerfen.

10. Anlage nach Anspruch 9, wobei die Auswerfer (28) des Extrusionsmoduls Luftventile (30) umfassen, um zwischen dem Auswerfer und dem Teigling Luft freizugeben.

11. Anlage nach einem der Ansprüche 8 bis 10, wobei das Auslegemodul die zum Abdruck komplementär geformten Matrize (34) umfasst, die bestimmt ist, am Abdruck in Anlage zu kommen, um die Teiglinge zu zerdrücken und einen Teig zu formen, der mindestens den Boden des Abdrucks bedeckt.

12. Anlage nach Anspruch 11, wobei die Matrize (34) des Auslegemoduls mindestens einen elektrischen Widerstand (36) umfasst, um die Matrize zu heizen, und mindestens ein Luftventil (38), um Luft zwischen die Matrize und den Teig zu leiten, der den Boden des Abdrucks bedeckt.

## Claims

1. A method for the automated preparation of crown-shaped tart shells, comprising the conveying on a conveyor (4) of crown-shaped recesses (M), the method comprising successively an extrusion step, a deposition step and a lining step, wherein:
- the extrusion step comprises the filling of at least one cell (20) of a rotary cell support cylinder (18) with dough;
- the deposition step comprises the ejection of the dough rolls (P') out of the rotary cell support cylinder (18) and the deposition on a shell of each recess of at least two separate dough rolls; and
- the lining step comprises the crushing of the dough rolls deposited in each recess by means of a matrix (34) complementary in shape to the recess in order to form a dough covering at least the shell of the recess.

2. The method according to claim 1, wherein the deposition step comprises the deposition within each recess of four separate dough rolls evenly spaced about an axis of symmetry of the recess.

3. The method according to any of claims 1 and 2, wherein, for each recess, said at least two dough rolls are deposited simultaneously during the deposition step.

4. The method according to any one of claims 1 to 3, wherein, during the deposition step, the dough rolls are ejected out of the rotary cell support cylinder (18) by an ejector (28) equipped with air valves (30) which release air between the ejector and the dough roll.

5. The method according to any one of claims 1 to 4, wherein the lining step comprises the heating of the matrix in order to prevent the dough covering the shell of the recess from sticking to the matrix.

6. The method according to any one of claims 1 to 6, wherein the lining step further comprises the injection of air between the matrix and the dough covering the shell of the recess in order to facilitate the detachment from the matrix.

7. The method according to any one of claims 1 to 7, wherein the recesses (M) are tart pans, the method further comprising, prior to the extrusion step, a step of unstacking the tart pans during which stacks (14) of tart pans are automatically unstacked to be deposited on the conveyor.

8. An installation for the automated preparation of crown-shaped tart shells, comprising crown-shaped recesses (M), a conveyor (4) intended to move the recesses (M) along a production line, an extrusion module (6) intended to fill at least one cell (20) of a rotary cell support cylinder (18) with dough, a deposition module (7) for ejecting dough rolls (P') out of the cell support cylinder (18) and depositing at least two separate dough rolls (P') on a shell of each recess, and a lining module (8) intended to crush the dough rolls deposited in each recess by means of a matrix (34) complementary in shape to the recess in order to form a dough covering at least the shell of the recess.

9. The installation according to claim 9, wherein the extrusion module comprises the rotary cell support cylinder (18) provided with at least one cell (20) intended to be filled with dough in order to form a dough roll, and ejectors (28) intended to eject the dough rolls out of the rotary cell support cylinder.

10. The installation according to claim 9, wherein the ejectors (28) of the extrusion module comprise air valves (30) for releasing air between the ejector and the dough roll.

11. The installation according to any one of claims 8 to 10, wherein the lining module comprises the matrix (34) complementary in shape to the recess intended to come against the recess in order to crush the dough rolls and form dough covering at least the shell of the recess.

12. The installation according to claim 11, wherein the matrix (34) of the lining module comprises at least one electrical resistance (36) for heating the matrix, and at least one air valve (38) for injecting air between the matrix and the dough covering the shell of the recess.
